# FASCICULE DE BREVET EUROPEEN

(11) **EP 1 248 028 B1**
(45) Date de publication et mention de la délivrance du brevet: **15.12.2004**
(21) Numéro de dépôt: 02290796.8
(22) Date de dépôt: 29.03.2002
(51) Int. Cl.: F16L 23/16

(54) **Raccord etanche**
Abgedichtete Kupplung
Leak-proof coupling

(30) Priorité: 05.04.2001 FR 0104639
(43) Date de publication de la demande: 09.10.2002
(73) Titulaire: HUTCHINSON, 75008 Paris (FR)
(72) Inventeur: Crapart, René, 49500 Sainte Gemmes d'Andigne (FR); Blouin, Christophe, 53200 Chateau-Gontier (FR)
(74) Mandataire: Burbaud, Eric

(56) Documents cités:
- WO-A-00/75538
- FR-A- 2 759 756
- US-A- 3 570 374

## Description

La présente invention est relative aux raccords étanches.

Plus particulièrement, l'invention concerne un raccord étanche destiné à relier entre eux des canaux ménagés respectivement dans des première et deuxième pièces rigides solidarisées l'une à l'autre, ce raccord étanche comprenant au moins un insert tubulaire qui comprend une armature tubulaire rigide s'étendant axialement entre des première et deuxième extrémités ouvertes, lesdites première et deuxième extrémités étant revêtues respectivement de premier et deuxième bourrelets d'élastomère qui font saillie axialement au-delà de l'extrémité correspondante de l'armature tubulaire.

Il s'agira par exemple de réaliser, grâce à ce raccord, la continuité de canaux de passage d'un fluide dans les deux pièces, généralement séparées par une ou plusieurs entretoises. Dans la pratique ce fluide pourra être de l'huile en circulation sous une pression variable, éventuellement de façon pulsatoire, de 0 à plusieurs dizaines de bars, à température également très variable (- 40 à + 150°C par exemple). Les pièces en question peuvent appartenir à des carters, notamment dans une boîte de vitesses automatiques.

On connaît par le document FR-A-2 759 756, un raccord étanche du type susmentionné, dans lequel l'insert tubulaire est en appui étanche contre deux surfaces opposées appartenant respectivement aux deux pièces à raccorder. Ce raccord étanche donne toute satisfaction du point de vue de son fonctionnement technique, mais présente néanmoins l'inconvénient de ne pas permettre aisément la liaison entre les canaux de chacune des pièces, lorsque ceux-ci sont décalés : en effet, on est alors conduit à adopter un insert tubulaire de grand diamètre ou de section ovale, encombrant et coûteux.

De même, lorsque les canaux d'une même pièce sont très rapprochés, les raccords du document FR-A-2 759 756 ne sont pas facilement utilisables, car ils nécessitent un écartement relativement important entre les canaux.

La présente invention a notamment pour but de pallier ces inconvénients.

A cet effet, selon l'invention, un raccord du genre en question est caractérisé en ce qu'il comporte en outre un bloc intermédiaire rigide présentant des première et deuxième faces opposées dans lesquelles débouche un conduit traversant ledit bloc intermédiaire, la première face étant dotée d'un dispositif d'étanchéité adapté pour venir en appui étanche contre la première pièce rigide en isolant ledit conduit, le conduit formant un logement cylindrique qui s'étend entre la deuxième face du bloc intermédiaire et un épaulement orienté vers ladite deuxième face, et l'insert tubulaire étant disposé dans ledit logement avec son premier bourrelet en appui axial étanche contre l'épaulement dudit logement et son deuxième bourrelet faisant saillie hors du logement, ce deuxième bourrelet étant destiné à venir en appui étanche contre la deuxième pièce rigide.

Grâce à ces dispositions, on peut réaliser la connexion étanche entre des canaux cheminant dans des pièces différentes, même lorsque ces canaux sont fortement désaxés : dans ce cas, on peut en effet réaliser un conduit coudé dans le bloc intermédiaire, ce conduit conservant un diamètre relativement faible.

De plus, lorsque les canaux de la première pièce sont très rapprochés l'un de l'autre, on peut : soit percer plusieurs conduits parallèles dans le bloc intermédiaire et prévoir sur la deuxième face dudit bloc intermédiaire de simples joints annulaires en appui sur la première pièce rigide, lorsque les canaux en question correspondent à des flux de liquides qui doivent rester séparés, soit faire déboucher ces canaux dans le même conduit du bloc intermédiaire, dans le cas contraire.

Dans des modes de réalisation préférés de l'invention, on peut éventuellement avoir recours en outre aux dispositions suivantes :
- le bourrelet de l'insert comporte en périphérie une excroissance de matière destinée à limiter le coulissement de l'insert dans son logement ;
- le logement comporte en périphérie une excroissance de matière destinée à limiter le coulissement de l'insert ;
- le dispositif d'étanchéité est un anneau en élastomère surmoulé sur la première face du bloc intermédiaire ;
- le dispositif d'étanchéité est un deuxième insert tubulaire logé dans un deuxième logement formé dans le conduit, ledit deuxième insert comprenant une armature tubulaire rigide s'étendant axialement entre des première et deuxième extrémités ouvertes revêtues respectivement de premier et deuxième bourrelets d'élastomère, le premier bourrelet étant en appui d'un épaulement formé dans le deuxième logement et le deuxième bourrelet étant destiné à venir en appui étanche contre la première pièce rigide ;
- le bloc intermédiaire comporte, sur au moins l'une des faces destinées à venir en appui de l'une des première ou seconde pièces, un dispositif de positionnement adapté pour coopérer par emboîtement avec au moins l'une des première et deuxième pièces rigides ;
- l'armature tubulaire est revêtue d'une couche continue d'élastomère qui est formée d'une seule pièce avec les premier et deuxième bourrelets ;
- le premier bourrelet d'élastomère est compressible élastiquement sur une distance axiale d'au moins 5 mm.

D'autres caractéristiques et avantages de l'invention apparaîtront au cours de la description suivante de diverses formes de réalisation, donnée à titre d'exemple non limitatif, en regard des dessins joints.

Sur les dessins :
- les figures 1, 2, 3 sont des vues en élévation latérale de trois modes de réalisation différents du raccord étanche objet de l'invention ;
- les figures 4 et 5 sont des vues en détail de l'un des dispositifs d'étanchéité du raccord étanche représenté en figures 1, 2, 3 ;
- la figure 6 est une vue en détail du bord d'un des logements recevant l'insert, formant le dispositif d'étanchéité du raccord étanche.

Sur les différentes figures, les mêmes références désignent des éléments identiques ou similaires.

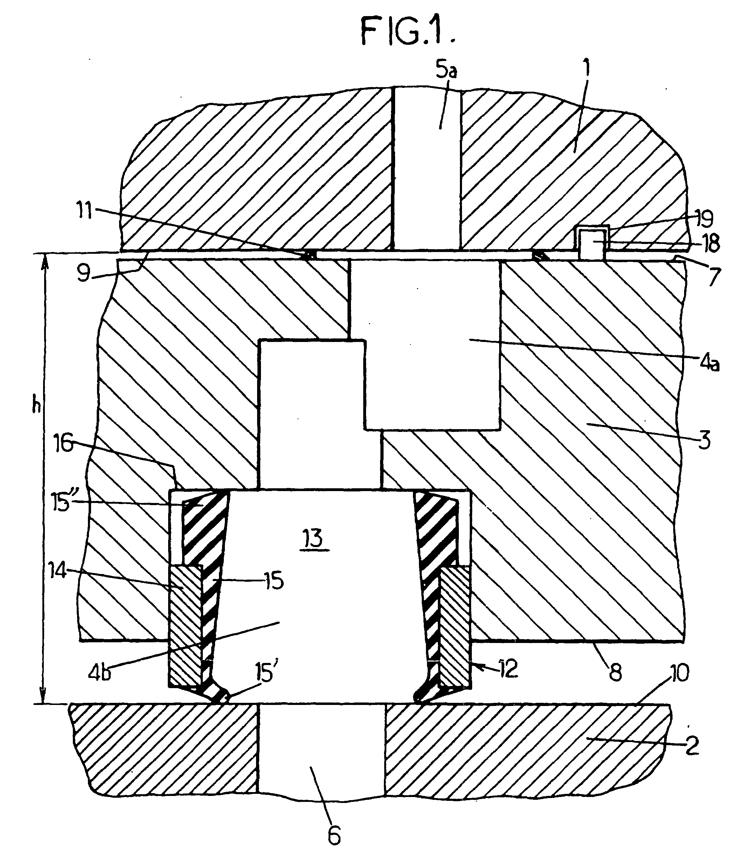

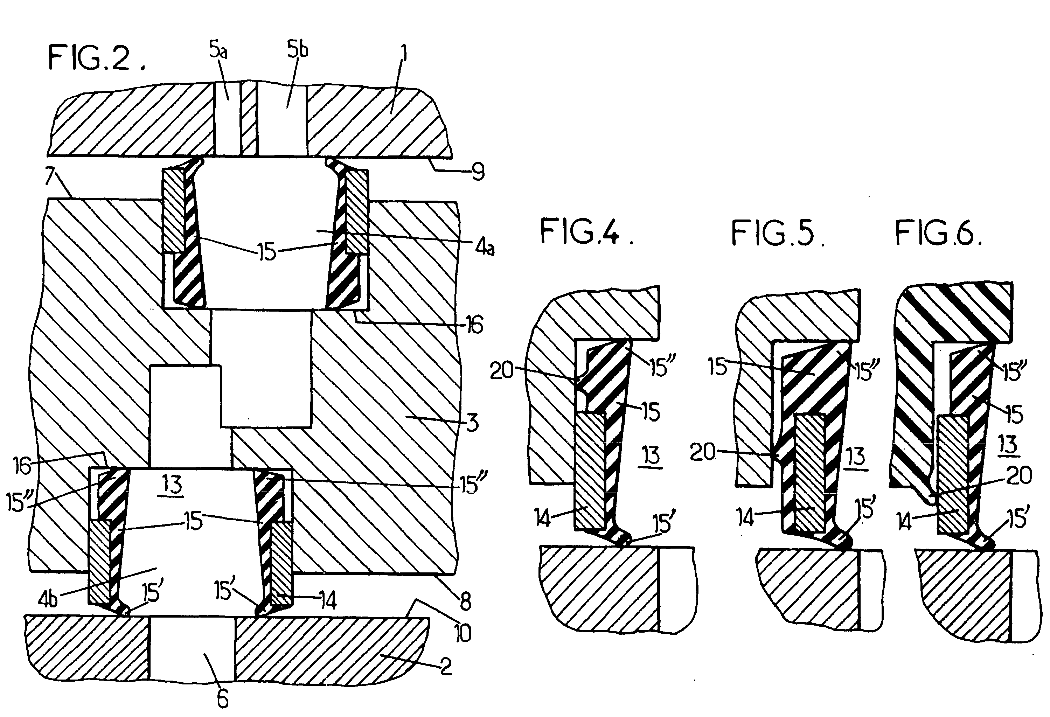

Sur les figures 1 et 2, on a référencé en 1 et 2 deux pièces écartées d'une distance h dans une zone où doit s'effectuer une liaison étanche entre ces pièces.

Les pièces 1 et 2 sont respectivement traversées par des canaux 5, et 6 fortement désaxés l'un par rapport à l'autre (figure 1), qui sont reliés l'un à l'autre de façon étanche par un raccord comprenant un bloc intermédiaire rigide 3, notamment en acier. Ce bloc intermédiaire 3 est traversé par au moins un conduit comprenant deux tronçons 4a, 4b de diamètre supérieur à celui des canaux 5, 6 et débouchant respectivement dans ces canaux ménagés dans les pièces 1 et/ou 2.

Bien entendu, le bloc intermédiaire 3 pourra aussi être élaboré par exemple en aluminium, en matière plastique (résine de type PA 6-6 ou PPS, éventuellement chargés en fibres de verre ou analogue), ou autre.

L'une des faces 7, 8 du bloc intermédiaire 3 qui est destinée à venir en appui lors du montage contre l'une des faces 9, 10 d'appui de la pièce 1 (ou de la pièce 2) comporte un dispositif d'étanchéité 11, constitué par exemple par un anneau en élastomère surmoulé, au droit de l'orifice débouchant du conduit 4a.

L'autre face 8 du bloc intermédiaire 3 qui est destinée à venir en appui contre l'une des faces d'appui 9, 10 de la pièce 2 (ou de la pièce 1) comporte un deuxième dispositif d'étanchéité 12.

Ce deuxième dispositif d'étanchéité 12 est réalisé à partir d'un insert tubulaire 13, celui-ci comprenant :
- une armature tubulaire rigide 14; et
- au moins un tube 15 en caoutchouc ou matière synthétique élastique, revêtant au moins les extrémités de ladite armature et présentant à ses deux extrémités un premier et second bourrelet (15', 15'') recouvrant l'extrémité correspondante de cette armature, ces premier et second bourrelets pouvant ainsi être comprimés (de l'ordre par exemple de 5mm), lors du montage, de façon étanche, entre d'une part, l'une des faces d'appui appartenant aux pièces 1 ou 2 et d'autre part, un épaulement 16 réalisé dans le fond du conduit 4b.

On comprend alors que l'armature tubulaire rigide 14 extérieure ou intérieure de l'insert 13 empêchera toute déformation sensible, notamment toute dilatation, du tube de caoutchouc 15 intérieur ou extérieur assurant l'étanchéité du passage. Les extrémités de cette armature serviront quant à elles d'appuis pour les bourrelets d'extrémité (15', 15'') du tube 15, comprimés entre la pièce 1 ou 2 et l'épaulement 16 réalisé dans le conduit 4a, 4b du bloc intermédiaire 3, ce qui maintiendra l'étanchéité aux extrémités du raccord étanche.

L'armature tubulaire 14 pourra être avantageusement métallique, réalisée sous forme massive ou encore sous la forme d'une tresse en fils métalliques ou fibres minérales ou synthétiques, dans le cas où elle n'aurait pas à être soumise à des efforts de compression axiaux.

On comprend aisément, comme représenté en figure 2, que l'on peut substituer au dispositif d'étanchéité 11 (l'anneau en élastomère), un second dispositif d'étanchéité 12 (insert tubulaire), ce dernier étant inséré dans un logement du conduit 4a et s'appuyant au niveau de l'un de ses bourrelets 15', 15'', au niveau d'un épaulement.

Par ailleurs, sur la figure 3, on a représenté un dispositif de liaison identique à celui représenté en figure 1, mais qui permet de mettre en relation de manière étanche des canaux 5a et 5b de la pièce 1 très rapprochés à des canaux 6a, 6b situés dans la pièce 2.

Quel que soit le mode de réalisation, on remarque que l'épaisseur des inserts 13 (mesurée au repos, c'est-à-dire que les bourrelets d'extrémité ne sont pas comprimés) est supérieure à la profondeur du logement dans lequel vient se loger ledit insert, de sorte que lorsque les pièces 1 et 2 sont rapprochées l'une de l'autre, la compression des bourrelets (15', 15'') compense, comme cela se rencontre dans la pratique, une importante dispersion des épaisseurs du bloc intermédiaire 3, ainsi que des jeux variables entre elle et les pièces 1 et/ou 2.

Par ailleurs, on prévoit de disposer au niveau de l'une des faces frontales 7, 8 du bloc intermédiaire 3 et de la face 9 ou 10 en regard appartenant à la pièce 1 ou 2, un dispositif de positionnement 17, adapté pour coopérer par emboîtement avec au moins l'une des première et deuxième pièces rigides 1, 2. Il peut s'agir d'un pion 18 faisant saillie par rapport à la face frontale 7 ou 8 du bloc intermédiaire 3, ce dernier coopérant au niveau d'un orifice 18 réalisé sur l'une des pièces 1 ou 2.

Sur les figures 4, 5, 6, on a représenté différents modes de réalisation de dispositifs permettant de limiter le coulissement de l'insert 13 au sein de son logement dans le conduit 4a, 4b.

Ainsi en figure 4, une excroissance de matière 20, notamment en élastomère, est venue de fabrication avec l'un des bourrelets 15', 15'' situés à l'extrémité de l'insert 13.

En figure 5, cette excroissance de matière 20 est réalisée sur la surface externe périphérique de l'insert 13 et est venue lors du surmoulage.

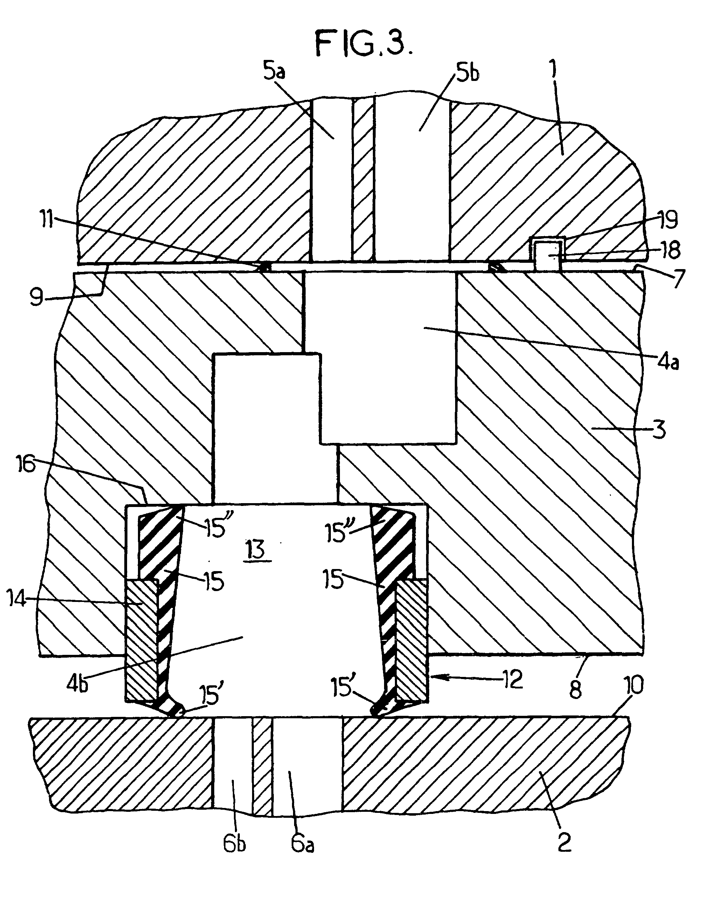

En figure 6, l'excroissance de matière 20 est formée par une lèvre située au droit de l'orifice de sortie du logement recevant l'insert 13.

Quel que soit le mode de réalisation, l'excroissance de matière 20 permet de générer un frottement entre l'insert 13 et une paroi du conduit 4a, 4b dans lequel il est logé, limitant ainsi le déplacement de ce dernier.

## Revendications

1. Raccord étanche destiné à relier entre eux des canaux (5,5a,5b,6,6a,6b) ménagés respectivement dans des première et deuxième pièces (1,2) rigides solidarisées l'une à l'autre, ce raccord étanche comprenant au moins un insert tubulaire (13) qui comprend une armature tubulaire (14) rigide s'étendant axialement entre des première et deuxième extrémités ouvertes, lesdites première et deuxième extrémités étant revêtues respectivement de premier et deuxième bourrelets d'élastomère (15',15'') qui font saillie axialement au-delà de l'extrémité correspondante de l'armature tubulaire (14), **caractérisé en ce qu'**il comporte en outre un bloc intermédiaire (3) rigide présentant des première et deuxième faces opposées (7,8) dans lesquelles débouche un conduit (4a,4b) traversant ledit bloc intermédiaire, la première face (7) étant dotée d'un dispositif d'étanchéité (11) adapté pour venir en appui étanche contre la première pièce (1) rigide en isolant ledit conduit, le conduit formant un logement cylindrique qui s'étend entre la deuxième face (8) du bloc intermédiaire (3) et un épaulement (16) orienté vers ladite deuxième face, et l'insert tubulaire (13) étant disposé dans ledit logement avec son premier bourrelet (15') en appui axial étanche contre l'épaulement (16) dudit logement et son deuxième bourrelet (15'') faisant saillie hors du logement, ce deuxième bourrelet (15'') étant destiné à venir en appui étanche contre la deuxième pièce rigide (2).

2. Dispositif de liaison selon la revendication 1, dans lequel le bourrelet (15',15'') de l'insert (13) comporte en périphérie une excroissance de matière (20) destinée à limiter le coulissement de l'insert (13) dans son logement.

3. Dispositif de liaison selon la revendication 1, dans lequel le logement comporte en périphérie une excroissance de matière (20) destinée à limiter le coulissement de l'insert (13).

4. Dispositif de liaison selon l'une quelconque des revendications 1 à 3, dans lequel le dispositif d'étanchéité (11) est un anneau en élastomère surmoulé sur la première face (7) du bloc intermédiaire (3).

5. Dispositif de liaison selon l'une quelconque des revendications 1 à 3, dans lequel le dispositif d'étanchéité (11) est un deuxième insert tubulaire (13) logé dans un deuxième logement formé dans le conduit (4a), ledit deuxième insert comprenant une armature tubulaire (14) rigide s'étendant axialement entre des première et deuxième extrémités ouvertes revêtues respectivement de premier et deuxième bourrelets d'élastomère (15',15''), le premier bourrelet (15') étant en appui d'un épaulement (16) formé dans le deuxième logement et le deuxième bourrelet (15'')étant destiné à venir en appui étanche contre la première pièce rigide (1).

6. Dispositif de liaison selon l'une quelconque des revendications 1 à 5, dans lequel le bloc intermédiaire (3) comporte, sur l'une des faces (7,8) destinées à venir en appui de l'une des pièces (1,2), un dispositif de positionnement (17) adapté pour coopérer par emboîtement avec au moins l'une des première et deuxième pièces rigides (1,2).

7. Dispositif de liaison selon l'une quelconque des revendications 1 à 6, dans lequel l'armature tubulaire (14) est revêtue d'une couche continue d'élastomère qui est formée d'une seule pièce avec les premier et deuxième bourrelets (15',15'').

8. Dispositif de liaison selon l'une quelconque des revendications 1 à 7, dans lequel le premier bourrelet d'élastomère (15") est compressible élastiquement sur une distance axiale d'au moins 5 mm.

## Patentansprüche

1. Abgedichtete Kupplung, die dafür vorgesehen ist, Kanäle (5, 5a, 5b, 6, 6a, 6b) zu verbinden, die in einem ersten starren Teil (1) bzw. einem zweiten, damit verbundenen starren Teil (2) angeordnet sind, wobei diese abgedichtete Kupplung wenigstens einen rohrförmigen Einsatz (13) umfasst, der eine starre, rohrförmige Bewehrung (14) umfasst, die sich axial zwischen einem ersten und einem zweiten offenen Ende erstreckt, wobei das erste und das zweite Ende mit einer ersten bzw. einer zweiten elastischen Wulst (15', 15") bedeckt sind, die jenseits des entsprechenden Endes der rohrförmigen Bewehrung (14) herausragen, **dadurch gekennzeichnet, dass** sie außerdem einen starren, Zwischenblock (3) umfasst, der eine erste (7) und eine zweite, dieser gegenüberliegende Flächen (8) aufweist, in die ein Kanal (4a, 4b) mündet, der den Zwischenblock durchdringt, wobei die erste Fläche (7) mit einer Abdichtungsvorrichtung (11) versehen ist, die dazu ausgestaltet ist, sich an dem ersten starren Teil (1) dichtend abzustützen, so dass der Kanal isoliert wird, wobei der Kanal eine zylindrische Aufnahme bildet, die sich zwischen der zweiten Fläche (8) des Zwischenblocks (3) und einer zu der zweiten Fläche hin gerichteten Schulter (16) erstreckt, und der rohrförmige Einsatz (13) in der Aufnahme angeordnet ist, wobei seine erste Wulst (15') sich axial dichtend an der Schulter (16) der Aufnahme abstützt und seine zweite Wulst (15") aus der Aufnahme herausragt, wobei diese zweite Wulst (15'') dazu ausgestaltet ist, sich an dem zweiten starren Teil (2) dichtend abzustützen.

2. Verbindungsvorrichtung nach Anspruch 1, bei der die Wulst (15', 15") des Einsatzes (13) am Umfang eine Materialausstülpung (20) umfasst, die dafür vorgesehen ist, das Gleiten des Einsatzes (13) in dessen Aufnahme zu begrenzen.

3. Verbindungsvorrichtung nach Anspruch 1, bei der die Aufnahme am Umfang eine Materialausstülpung (20) umfasst, um das Gleiten des Einsatzes (13) zu begrenzen.

4. Verbindungsvorrichtung nach einem der Ansprüche 1 bis 3, bei der die Abdichtungsvorrichtung (11) ein auf der ersten Fläche (7) des Zwischenblocks (3) angeformter Ring aus Elastomer ist.

5. Verbindungsvorrichtung nach einem der Ansprüche 1 bis 3, bei der die Abdichtungsvorrichtung (11) ein zweiter rohrförmiger Einsatz (13) ist, der in einer zweiten Aufnahme angeordnet ist, die in dem Kanal (4a) ausgebildet ist, wobei der zweite Einsatz eine rohrförmige, starre Bewehrung (14) umfasst, die sich axial zwischen einem ersten und einem zweiten offenen Ende erstreckt, die mit einer ersten bzw. zweiten elastischer Wulst (15', 15") bedeckt sind, wobei die erste Wulst (15') sich an einer Schulter (16) abstützt, die in der zweiten Aufnahme gebildet ist, und die zweite Wulst (15") dafür vorgesehen ist, sich dichtend an dem ersten starren Teil (1) abzustützen.

6. Verbindungsvorrichtung nach einem der Ansprüche 1 bis 5, bei welcher der Zwischenblock (3) an einer der Flächen (7, 8), die dafür vorgesehen sind, sich an einem der Teile (1, 2) abzustützen, eine Positioniervorrichtung (17) umfasst, die dazu ausgestaltet ist, durch Einfügung mit dem ersten und/oder dem zweiten starren Teil (1, 2) zusammenzuwirken.

7. Verbindungsvorrichtung nach einem der Ansprüche 1 bis 6, bei der die rohrförmige Bewehrung (14) mit einer kontinuierlichen, elastischen Schicht bedeckt ist, die einstückig mit der ersten und zweiten Wulst (15', 15'') gebildet ist.

8. Verbindungsvorrichtung nach einem der Ansprüche 1 bis 7, bei welcher die erste elastische Wulst (15'') über einen axialen Abstand von wenigstens 5 mm elastisch zusammendrückbar ist.

## Claims

1. A leaktight coupling for interconnecting channels (5, 5a, 5b, 6, 6a, 6b) formed respectively in first and second rigid pieces (1, 2) that are secured to each other, the leaktight coupling comprising at least one tubular insert (13) including a rigid tubular strength member (14) extending axially between first and second open ends, said first and second ends being covered with respective first and second elastomer beads (15', 15") which project axially beyond the corresponding end of the tubular strength member (14), the coupling being **characterized in that** it further comprises a rigid intermediate block (3) presenting first and second opposite faces (7, 8) into which a duct (4a, 4b) passing through said intermediate block opens out, the first face (7) being provided with a sealing device (11) for pressing in leaktight manner against the first rigid piece (1) so as to isolate said duct, the duct forming a cylindrical housing which extends between the second face (8) of the intermediate block (3) and a shoulder (16) facing towards said second face, and the tubular insert (13) being disposed in said housing with its first bead (15') bearing axially in leaktight manner against the shoulder (16) of said housing and with its second bead (15") projecting from said housing, said second bead (15") being designed to press in leaktight manner against the second rigid piece (2).

2. A connection device according to claim 1, in which the bead (15', 15") of the insert (13) has a peripheral projection of material (20) for limiting sliding of the insert (13) in its housing.

3. A connection device according to claim 1, in which the housing has a peripheral projection of material (20) for limiting sliding of the insert (13).

4. A connection device according to any one of claims 1 to 3, in which the sealing device (11) is an elastomer ring overmolded on the first face (7) of the intermediate block (3).

5. A connection device according to any one of claims 1 to 3, in which the sealing device (11) is a second tubular insert (13) housed in a second housing formed in a duct (4a), said second insert comprising a rigid tubular strength member (14) extending axially between first and second open ends covered respectively in first and second elastomer beads (15', 15"), the first bead (15') pressing against a shoulder (16) formed in the second housing, and the second bead (15") being for pressing in leaktight manner against the first rigid piece (1).

6. A connection device according to any one of claims 1 to 5, in which the intermediate block (3) includes a positioning device (17) on one of its faces (7, 8) for bearing against one of the pieces (1, 2), the positioning device being adapted to co-operate by engaging with at least one of the first and second rigid pieces (1, 2).

7. A connection device according to any one of claims 1 to 6, in which the tubular strength member (14) is provided with a continuous elastomer layer which is formed integrally with the first and second beads (15', 15").

8. A connection device according to any one of claims 1 to 7, in which the first elastomer bead (15") is elastically compressible over an axial distance of at least 5 mm.
